# EUROPEAN PATENT SPECIFICATION

(11) **EP 4 101 220 B1**
(45) Date of publication and mention of the grant of the patent: **09.04.2025**
(21) Application number: 20704289.6
(22) Date of filing: 07.02.2020
(51) Int. Cl.: H04W 74/0808, H04W 72/0453

(54) **TRANSMITTING DATA IN UNLICENSED SPECTRUM**
ÜBERTRAGUNG VON DATEN IM UNLIZENZIERTEN SPEKTRUM
TRANSMISSION DE DONNÉES DANS UN SPECTRE SANS LICENCE

(43) Date of publication of application: 14.12.2022
(73) Proprietor: Telefonaktiebolaget LM Ericsson (publ), 164 83 Stockholm (SE)
(72) Inventor: WILHELMSSON, Leif, 222 20 Lund (SE); AMBEDE, Abhishek, 141 58 Huddinge (SE); HIERTZ, Guido Roland, 52066 Aachen (DE); LOPEZ, Miguel, 170 69 Solna (SE); MATHECKEN, Pramod Jacob, 234 35 Lomma (SE)
(74) Representative: Ericsson
(86) International application number: PCT/EP2020/053211
(87) International publication number: WO 2021/155954

(56) References cited:
- US-A1- 2018 035 463
- US-A1- 2018 295 622

## Description

### Technical Field

Examples of the present disclosure relate to transmitting data in unlicensed spectrum.

### Background

US 2018/295622 relates to improved methods, systems, devices, or apparatuses that support channel reservation for multi-user scheduling.

US 2018/035463 relates to a user equipment (UE) or base station communicating in an unlicensed radio frequency (RF) spectrum band transmitting a signal (i.e., a request-to-send (RTS) or clear-to-send (CTS) signal) in licensed RF spectrum band in an effort to ensure that neighbouring devices do not interfere with the communication.

There is currently an increased interest in time sensitive networks (TSN) and applications with hard requirements on delay and delay jitter for communications. One example is industrial applications. To ensure low delay, the transmitter should preferably be able to access the channel instantaneously or with negligible delay. If this is not possible, a small deterministic delay may be acceptable for many applications. When wireless communication takes place in licensed spectrum to transmit communications in such scenarios, this can be achieved by pre-allocating resources, although this comes at a cost of reduced efficiency assuming the allocated resource is not needed on at least some occasions.

When wireless communication uses an unlicensed band, such as for example the 2.4GHz or 5GHz unlicensed band, before transmission in a channel a transmitter must typically first perform a measurement of the channel and determine whether the channel is idle. If the channel is not idle, for example because another transmitter is transmitting a signal in that channel, the transmitter must not access the channel but must instead defer from transmission. On the other hand, if the channel is idle, the transmitter must typically initiate a form of random access procedure. The random access procedure may or may not result in the transmitter gaining access to the channel and transmitting its data, as another device may begin a transmission in the meantime. Furthermore, when the transmitter gains access to the channel and can start a transmission, the time it takes before the transmission can begin may vary due to the random nature of the channel access scheme.

In addition, and in particular when operating in unlicensed bands, receiver conditions may be unknown. This suggests that even if the transmitting device is able to transmit a packet as desired, the intended receiver may not be able to decode it. This is an inherent problem for systems where channel access is based on sensing the channel, as it is the transmitting device that determines whether to transmit or not without any, or very limited, knowledge about the receiver conditions.

The problems described above make it challenging to support applications that require high reliability and low delay in unlicensed bands. Also, in licensed bands, supporting low latency applications may have a significant cost in terms of spectrum efficiency, since the channel may need to be reserved due to the possibility that a transmitter needs to access the channel with a small delay, even if channel access is not actually needed by the transmitter on that occasion.

### Summary

The reader is referred to the appended independent claims. Some preferred features are laid out in the dependent claims.

One aspect of the present disclosure provides a method in a wireless device of transmitting data on a first channel in unlicensed spectrum. The method comprises determining that a transmitter is transmitting a first signal on the first channel in unlicensed spectrum, transmitting a second signal to cause the transmitter to cease transmitting the signal, and transmitting the data on the first channel in unlicensed spectrum.

Another aspect of the present disclosure provides a method in a first wireless device of transmitting a signal in unlicensed spectrum. The method comprises transmitting a first signal on a first channel in unlicensed spectrum, receiving a second signal from a second wireless device, and ceasing transmission of the first signal in response to receiving the second signal.

Another aspect of the present disclosure provides apparatus in a wireless device for transmitting data on a first channel in unlicensed spectrum. The apparatus comprises a processor and a memory. The memory contains instructions executable by the processor such that the apparatus is operable to determine that a transmitter is transmitting a first signal on the first channel in unlicensed spectrum, transmit a second signal to cause the transmitter to cease transmitting the signal, and transmit the data on the first channel in unlicensed spectrum.

Another aspect of the present disclosure provides apparatus in a first wireless device for transmitting data on a first channel in unlicensed spectrum. The apparatus comprises a processor and a memory. The memory contains instructions executable by the processor such that the apparatus is operable to transmit a first signal on a first channel in unlicensed spectrum, receive a second signal from a second wireless device, and cease transmission of the first signal in response to receiving the second signal.

Another aspect of the present disclosure provides apparatus in a wireless device for transmitting data on a first channel in unlicensed spectrum. The apparatus is configured to determine that a transmitter is transmitting a first signal on the first channel in unlicensed spectrum, transmit a second signal to cause the transmitter to cease transmitting the signal, and transmit the data on the first channel in unlicensed spectrum.

Another aspect of the present disclosure provides apparatus in a first wireless device for transmitting data on a first channel in unlicensed spectrum. The apparatus is configured to transmit a first signal on a first channel in unlicensed spectrum, receive a second signal from a second wireless device, and cease transmission of the first signal in response to receiving the second signal.

### Brief Description of the Drawings

For a better understanding of examples of the present disclosure, and to show more clearly how the examples may be carried into effect, reference will now be made, by way of example only, to the following drawings in which:
Figure 1 is a flow chart of an example of a method in a wireless device of transmitting data on a first channel in unlicensed spectrum;
Figure 2 shows an example of signals within a 20MHz channel;
Figure 3 shows another example of signals within a 20MHz channel;
Figure 4 is a flow chart of an example of a method in a first wireless device of transmitting a signal in unlicensed spectrum;
Figure 5 is a schematic of an example of apparatus 500 in a wireless device for transmitting data on a first channel in unlicensed spectrum; and
Figure 6 is a schematic of an example of apparatus 600 in a first wireless device for transmitting data on a first channel in unlicensed spectrum.

### Detailed Description

The following sets forth specific details, such as particular embodiments or examples for purposes of explanation and not limitation. It will be appreciated by one skilled in the art that other examples may be employed apart from these specific details. In some instances, detailed descriptions of well-known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers. Nodes that communicate using the air interface also have suitable radio communications circuitry. Moreover, where appropriate the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analogue) circuitry including but not limited to application specific integrated circuit(s) (ASIC) and/or field programmable gate array(s) (FPGA(s)), and (where appropriate) state machines capable of performing such functions.

The present disclosure proposes to introduce a signal that can be used, as claimed, to abort an ongoing transmission. In some examples, this signal may be referred to as a "shut-up" signal, contrary for example to a "wake-up" signal which may cause a receiver to "wake up" to receive another signal. In some examples, when a device has data to transmit that is time-critical (e.g. has a low latency requirement) and/or requires high reliability, the "shut-up" signal is sent first in order to cause the transmitter of the ongoing transmission to cease the transmission and clear the channel. After the shut-up signal is sent, the device can transmit its data on the channel. In some examples, the shut-up signal may either be sent out-of-band, i.e., on a different channel than the channel used for sending the data, or it may be sent in-band, i.e. using the same channel as is used for subsequent transmission of the data. In the latter case, in some examples, the transmitter of the ongoing transmission may support simultaneous transmission and reception (STR), commonly referred to as full duplex (FD). Moreover, the transmission of the shut-up signal may in some examples be performed at a power level which is low enough, and/or at a duty cycle which is low enough, to allow it to be transmitted without the need to perform any type of channel sensing such as for example listen before talk (LBT).

Examples disclosed herein are presented in the context of IEEE 802.11. However, it is considered that these examples are applicable to other wireless communication technologies such as for example 4G/LTE and 5G/NR (and in particular LTE LAA and NR-U), and hence this disclosure encompasses these examples applied to these other technologies. In the example case of IEEE 802.11, access to a communication channel in unlicensed spectrum is based on carrier sense multiple access with collision avoidance (CSMA/CA). That is, before a transmission can be initiated, the channel must be sensed to be idle. The sensing may be based on evaluating whether an 802.11 legacy preamble is present at a power level above a -82 dBm threshold and whether the received power is above a -62 dBm threshold. If either the power of the preamble or the received power as such is above the respective threshold, a transmission must not be initiated. Consequently, it is virtually impossible to ensure that a transmission can be initiated within a deterministic time frame, particularly in a scenario with many independent devices attempting to access the channel to send data.

In many cases, many transmissions in unlicensed bands could be delayed, for example by an additional 10ms or some other delay value, with few or no negative effects. An example is downloading of a web page, where such a small delay would not be noticeable to the end user. Another example is a streaming application, where it can be assumed that the peak data rate of the download exceeds the average data rate needed, and/or that the receiver also has a buffer which can absorb delays and varying bandwidth. With applications like voice (e.g. VoIP), which in 802.11 is transmitted using the highest access category, a small delay to data would likely mean that a small disturbance is experienced by the user at the receiver, but this may not significantly impact the end user, e.g. would not significantly impact comprehension of the received voice. Consequently, there is little or no impact of a short delay in the radio layer. Furthermore, in many cases a system may be designed to deal with errors on the physical layer, e.g. by means of error correcting coding and time interleaving, and/or by means of retransmission in case a packet is not acknowledged as correctly received.

Having established that a short interruption of an ongoing transmission in order to support time critical transmissions is unlikely to cause any noticeable effect in terms of user experience, examples of the present disclosure provide various ways to achieve this. Examples of the present disclosure provide the introduction of a dedicated signal, herein referred to as a "shut-up signal". The shut-up signal (also referred to as a second signal in examples described below) is sent to force an ongoing transmission (also referred to as a first signal in examples described below) to end immediately, even if this means that the ongoing transmission will be corrupted (which in some examples may result in a retransmission of the interrupted data at a later time). Examples of the present disclosure provide examples of the second signal, which may not need a channel sensing procedure to be performed before transmitting the second or "shut-up" signal. For example, LBT or another channel sensing procedure may not be needed if the shut-up signal has certain properties.

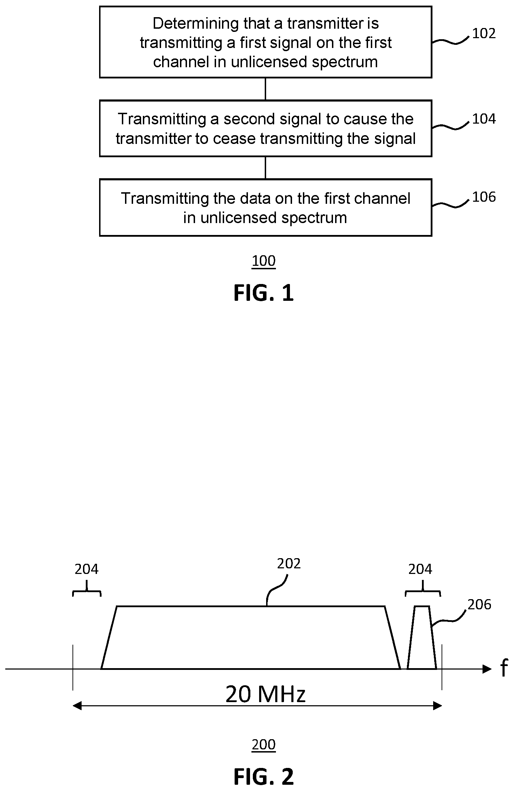

Figure 1 is a flow chart of an example of a method 100 in a wireless device of transmitting data on a first channel in unlicensed spectrum. The wireless device may be for example any type of device capable of wireless communications, such as for example an Access Point (AP) or wireless station (STA). The method comprises, in step 102, determining, as claimed, that a transmitter is transmitting a first signal on the first channel in unlicensed spectrum. This may be done for example by sensing the transmission on the first channel, such as for example as part of a Listen Before Talk (LBT) procedure or Clear Channel Assessment (CCA). Alternatively, for example, the wireless device may have prior knowledge of the signal, for example due to previous scheduling of the first signal, or if the wireless device is currently receiving the first signal (e.g. from an AP or STA).

Step 104 of the method 100 comprises transmitting, as claimed, a second signal (a "shut-up" signal) to cause the transmitter of the first signal to cease transmitting the first signal. For example, the transmitter of the first signal may detect the second signal and subsequently cancel, abandon or otherwise cease transmitting the first signal, even if transmission of the first signal is incomplete (e.g. partial transmission of a packet). This may for example clear the first channel for transmission. Step 106 of the method 100 subsequently comprises transmitting, as claimed, the data on the first channel in unlicensed spectrum. In some examples, the transmission of the data on the first channel in unlicensed spectrum may be performed without first performing a further determination of whether the channel is clear, as the wireless device may for example assume that the channel has become clear after step 104. Alternatively, for example, the wireless device may perform another determination of whether the channel is clear (e.g. another LBT, CCA or other procedure), or may determine that the channel is clear due to an ongoing procedure that also determined that the channel was not clear in step 102. In some examples, the second signal may be a continuous signal (until the end of the transmission of the second signal), though in other examples the second signal may be a discrete message or repeated (periodic) message or signal with "quiet" periods where the second signal is not transmitted.

Thus, the wireless device may for example be able to gain access to the first channel in unlicensed spectrum and transmit the data on the first channel with low delay. Examples may therefore be suitable for transmission of data with a low latency and/or high reliability requirement or constraint, such as industrial control data or high priority data. In some examples, by explicitly aborting ongoing transmissions when the channel is needed (e.g. by transmitting the second signal to cause the transmitter to cease transmission of the first signal), rather than pre-allocating channel resources, an increase in spectrum efficiency may be obtained.

In some examples, the second signal is transmitted on a second channel in unlicensed spectrum. The second channel may be the same channel as the first channel (i.e. the second signal is transmitted on the first channel), or the second channel may alternatively be different to the first channel.

In some examples, the second signal may be transmitted irrespective of whether the second channel is occupied. As a result, in some examples, the second signal is transmitted without determining whether the second channel is occupied, and/or can be transmitted even if the second channel is occupied.

In some examples, the second signal may be transmitted without performing an assessment of the second channel, such as for example a LBT procedure. This may be achieved for example by appropriately forming the second signal. For example, the second signal may be transmitted at a low enough power such that determining whether the second channel is occupied before transmitting the second signal is not required. In particular, for example, the transmission power of the second signal may be below the level above which local regulations or legal requirements may require such a procedure. As an example, for operation in the 2.4 GHz band in Europe the requirements are more relaxed if the transmission power of the second signal does not exceed 10 dBm, e.g. the LBT procedure is not required prior to transmission at or below this power. Although this transmission power may be much less than is used for transmitting data, in some examples the second signal may only carry a very small amount of information (e.g. one bit), and therefore the low in transmission power may in some examples be compensated by an improved sensitivity for a receiver of the second signal.

Additionally or alternatively, in some examples, the second signal is transmitted using a spread spectrum technique. The second signal may thus for example be spread across the second channel or may even be spread across multiple channels, which may help to reduce the transmission power in a particular channel. Thus using the spread spectrum technique may allow the second signal to be transmitted without performing an assessment of the second channel, such as for example a LBT procedure. The spread spectrum technique may achieve a low power spectrum density (PSD) on average, and may be achieved for example using direct sequence spread spectrum (DSSS) or frequency hopped spread spectrum (FHSS).

Additionally or alternatively, in some examples, the second signal may be transmitted at a low enough channel occupancy (also referred to in some examples as duty cycle) such that determining whether the second channel is occupied before transmitting the second signal (e.g. performing a procedure such as LBT) is not required. For example, the channel occupancy may be below the level above which local regulations or legal requirements may require such a procedure. In a particular example, the second signal may be transmitted such that it has a channel occupancy of less than 0.1% of the time period over which the second signal is transmitted. By the very idea of supporting time-critical data in a band by means of abruptly force ongoing transmissions to stop, this is only possible if the shut-up signals are sent relatively seldom. In another example, the time to transmit the second signal may be 100µs, and this may be transmitted periodically. A 5% channel occupation, above which LBT or other channel occupancy determination procedure would be required, would then correspond to the ability to send the second signal every 2ms, i.e. 500 times per second. It is envisioned that this is order of magnitudes more often than would be needed in a typical use case.

In some examples, the second channel for transmitting the second signal is different to the first channel and may e.g. comprise a channel that is reserved for transmitting the second signal. Thus for example the channel may be kept clear for transmission of the second signal, from the wireless device or from another wireless device for example. In some examples, the first and second channels may be part of a wireless environment managed by an AP or other network node, and the AP or node may reserve the second channel accordingly for connected wireless devices.

Allocating a dedicated second channel for the shut-up signal may in some examples have the advantage that a device currently transmitting the first signal can simultaneously listen on the dedicated channel, and thus may quickly detect when the second signal is transmitted. It may then for example quickly cease transmission of the first signal. In some examples, the second channel allocated for the second signal may be separated sufficiently in frequency from the first signal in order to allow for the device that is transmitter of the first signal and receiver of the second signal not to be severely interfered by the transmitted signal (e.g. so that the transmitter in the device that is transmitting the firstsignal does not swamp the receiver for the second signal in the device). In some examples, therefore, the first and second channels may not be adjacent channels, and may be separated by one, two or more channels, though in other examples the first and second channels may be adjacent channels. In some examples, the first and second channels may be separated by a frequency in the order of at least 50 MHz, which may in some examples a reasonable separation for devices using frequency division duplex (FDD) to simultaneously transmit the first signal and listen for the second signal. In some other examples, the first and second channels may be located in completely different frequency bands, so that e.g. the first signal is transmitted in the 2.4 GHz ISM band, whereas the second signal is transmitted in the 5 GHz band.

It can be noted that in some examples, allocating a dedicated (reserved) channel for the second signal may result in part of the available spectrum not being used for sending data, and thus may seem sub-optimal in terms of spectrum efficiency. To minimize the spectrum overhead required by sending the second signal out-of-band and in a dedicated channel, the following approach is also disclosed. A single channel (the second channel) allocated for the second signal can be used to cease transmission on one (or more) data channels, where the first channel is one of the data channels. For example, twenty data channels can be used together with a single shut-up channel, though in other examples a different number of data channels may be associated with the second channel in this way. In some examples, when a device wants to stop a transmission from another device on a specific data channel, it may send a message on the second channel indicating that all operation on this specific data channel should be stopped, but no data transmissions on other data channels will be impacted. One particular example way to achieve this is to associate a specific sequence to each data channel, so that for example when 20 data channels are associated with the second channel, at least 20 different sequences are used. When a transmitter is transmitting the first signal on channel N (N = 1,2,...,20 for example), it may in some examples at the same time listen on the second channel for the sequence corresponding to channel N, but not for any other of the sequences relating to other data channels. Only if the sequence corresponding to channel N is detected the transmission will be stopped. In some examples, the different sequences may be binary sequences with favourable cross-correlation properties, and the transmitter of the first signal may include a receiver for the second signal on the second channel, wherein the receiver is based on a correlator that continuously searches for the presence of the specific sequence corresponding to the channel the device currently is transmitting on (the first channel). Subsequently, for example, if the device changes to transmitting on another channel, the sequence used in the correlator may be changed accordingly.

In some examples, the second channel is the same as first channel. Thus the second signal is transmitted on the first channel. In such cases, the first and second signals may interfere with each other. In some examples, therefore, the second signal may be transmitted at least partially in a guard band of the first channel. Figure 2 shows an example of signals 200 within a 20MHz channel. Frequency is represented on the horizontal axis, and signal amplitude or power is represented on the vertical axis. The channel may be the first channel, though the bandwidth of 20MHz is provided as an example and in other examples the channel may have a different bandwidth. The first signal 202 is being transmitted in the first channel. Guard bands 204 located near the edges of the bandwidth of the first channel are frequency regions of reduced or zero power of the first signal 202 which may result in reduced interference between the first signal 202 and signals in other channels. The second signal 206 is shown being transmitted entirely within the upper frequency guard band 204. As a result, interference between the first signal 202 and second signal 206 may be reduced compared to if the second signal 206 is transmitted in the frequency range of the first signal 202. In some examples, the second signal may at least partially overlap with the first signal.

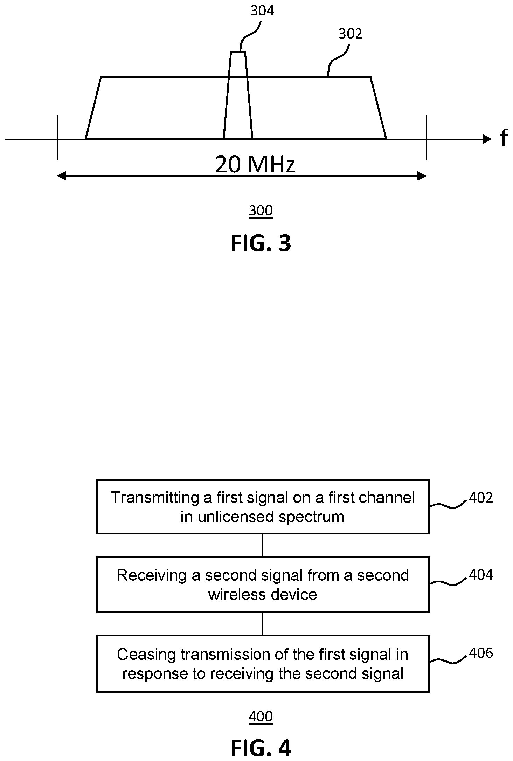

It is also possible in some examples to send the second signal in-band, i.e. in the first channel, but where the second signal is transmitted in a frequency range that is entirely within the bandwidth of the first signal. Figure 3 shows this scenario, which shows an example of signals 3 within a 20MHz channel. In Figure 3, frequency is represented on the horizontal axis, and signal amplitude or power is represented on the vertical axis. The channel may be the first channel, though the bandwidth of 20MHz is provided as an example and in other examples the channel may have a different bandwidth. The first signal 302 is being transmitted in the first channel, and the second signal 304 is transmitted in a frequency range that is entirely within the bandwidth of the first signal 302. This approach may be spectrum efficient, in particular if it is not possible to have the second channel dedicated to the second signal for one or more data channels. However, the transmitter of the first signal may in some examples be required to receive (or at least listen for) the second signal simultaneously with transmitting the first signal. However, full duplex operation of the transmitter of the first signal may be a feasible approach. Alternatively, however, in some examples, contrary to full duplex operation where the receiver may be required to receive ordinary data and thus may require a signal to noise ratio (SNR) of e.g. at least 20 dB, correct (e.g. reliable or decodable) reception of the second signal may be achieved at a lower SNR, for example at a SNR of 0 dB or less. This may be the case for example where the second signal is a low data rate signal or is a signal corresponding to a particular sequence, as suggested above. In the example shown in Figure 3, the bandwidth of the second signal 304 is considerably less than the bandwidth of the first signal 302, though in other examples the bandwidth of the second signal may be identical to the bandwidth of the data signal or it may be larger than the bandwidth of the data signal.

In some examples, determining that the transmitter is transmitting the first signal on the first channel in unlicensed spectrum comprises determining that the first channel is occupied, such as for example by performing a first Listen Before Talk, LBT, procedure on the first channel. Transmitting the data on the first channel in unlicensed spectrum may then in some examples comprise transmitting the data when the first LBT procedure indicates that the first channel is unoccupied. That is, for example, the first LBT procedure may continue during transmission of the second signal and subsequently determine that the first channel is unoccupied so that the data can be transmitted. Alternatively, for example, transmitting the data on the first channel in unlicensed spectrum comprises transmitting the data when a second LBT procedure, different or separate from the first LBT procedure, indicates that the first channel is unoccupied.

In other examples, determining that the first channel is occupied comprises determining that the wireless device is receiving the first signal from the transmitter. For example, the wireless device may be an AP that is receiving the first signal from a STA, or the wireless device may be a STA that is receiving the first signal from an AP.

Figure 4 is a flow chart of an example of a method 400 in a first wireless device of transmitting a signal in unlicensed spectrum. For example, the first wireless device may be the transmitter of the first signal referred to above in respect of the method 100 of Figure 1. The first wireless device may thus be for example an AP or STA. The method 400 comprises, in step 402, transmitting a first signal on a first channel in unlicensed spectrum. Step 402 of the method 400 comprises receiving a second signal from a second wireless device, and step 406 comprises ceasing transmission of the first signal (e.g. before completion of transmission of the first signal) in response to receiving the second signal. In some examples, the first and second signals are those signals referred to above in respect of the method 100 of Figure 1. In some examples, the second signal is received on a second channel in unlicensed spectrum, which may be the same as or different to the second channel.

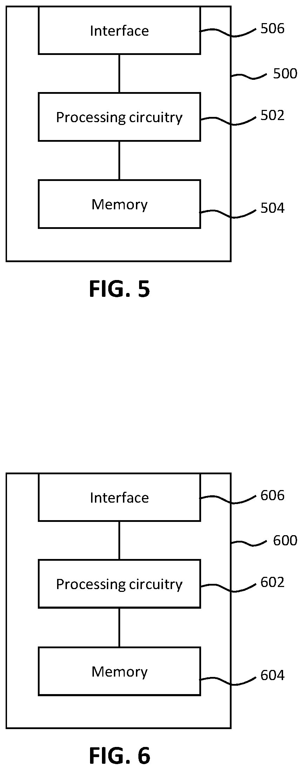

Figure 5 is a schematic of an example of apparatus 500 in a wireless device for transmitting data on a first channel in unlicensed spectrum. The apparatus 500 comprises processing circuitry 502 (e.g. one or more processors) and a memory 504 in communication with the processing circuitry 502. The memory 504 contains instructions executable by the processing circuitry 502. The apparatus 500 also comprises an interface 506 in communication with the processing circuitry 502. Although the interface 506, processing circuitry 502 and memory 504 are shown connected in series, these may alternatively be interconnected in any other way, for example via a bus.

In one embodiment, the memory 504 contains instructions executable by the processing circuitry 502 such that the apparatus 500 is operable to determine that a transmitter is transmitting a first signal on the first channel in unlicensed spectrum, transmit a second signal to cause the transmitter to cease transmitting the signal, and transmit the data on the first channel in unlicensed spectrum. In some examples, the apparatus 500 is operable to carry out the method 100 described above with reference to Figure 1.

Figure 6 is a schematic of an example of apparatus 600 in a first wireless device for transmitting data on a first channel in unlicensed spectrum. The apparatus 600 comprises processing circuitry 602 (e.g. one or more processors) and a memory 604 in communication with the processing circuitry 602. The memory 604 contains instructions executable by the processing circuitry 602. The apparatus 600 also comprises an interface 606 in communication with the processing circuitry 602. Although the interface 606, processing circuitry 602 and memory 604 are shown connected in series, these may alternatively be interconnected in any other way, for example via a bus.

In one embodiment, the memory 604 contains instructions executable by the processing circuitry 602 such that the apparatus 600 is operable to transmit a first signal on a first channel in unlicensed spectrum, receive a second signal from a second wireless device, and cease transmission of the first signal in response to receiving the second signal. In some examples, the apparatus 600 is operable to carry out the method 400 described above with reference to Figure 4.

The word "comprising" does not exclude the presence of elements or steps other than those listed in a claim, "a" or "an" does not exclude a plurality, and a single processor or other unit may fulfil the functions of several units recited in the statements below. Where the terms, "first", "second" etc. are used they are to be understood merely as labels for the convenient identification of a particular feature. In particular, they are not to be interpreted as describing the first or the second feature of a plurality of such features (i.e. the first or second of such features to occur in time or space) unless explicitly stated otherwise. Steps in the methods disclosed herein may be carried out in any order unless expressly otherwise stated. Any reference signs in the statements shall not be construed so as to limit their scope.

## Claims

1. A method (100) in a wireless device of transmitting data on a first channel in unlicensed spectrum, the method (100) comprising:
determining (102) that a transmitter is transmitting a first signal on the first channel in unlicensed spectrum;
transmitting (104) a second signal to cause the transmitter to cease transmitting the first signal, wherein the second signal is a signal for use to abort on ongoing transmission; and
transmitting (106) the data on the first channel in unlicensed spectrum.

2. The method (100) of claim 1, wherein the second signal is transmitted on a second channel in unlicensed spectrum.

3. The method (100) of claim 2, wherein the second signal is transmitted irrespective of whether the second channel is occupied.

4. The method (100) of claim 2 or 3, wherein the second signal is transmitted without determining whether the second channel is occupied.

5. The method (100) of any of claims 2 to 4, wherein the second signal is transmitted without performing a Listen Before Talk, LBT, procedure.

6. The method (100) of any of claims 2 to 5, wherein the second signal is transmitted at a low enough power such that determining whether the second channel is occupied before transmitting the second signal is not required.

7. The method (100) of any of claims 2 to 6, wherein the second signal is transmitted at a low enough channel occupancy such that determining whether the second channel is occupied before transmitting the second signal is not required.

8. The method (100) of any of claims 2 to 7, wherein the second channel is different to the first channel and comprises a channel that is reserved for transmitting the second signal, or wherein the second channel is the same as first channel.

9. The method (100) of claim 8, wherein the second signal is transmitted at least partially in a guard band of the first channel.

10. The method (100) of claim 8 or 9, wherein the second signal at least partially overlaps with the first signal.

11. The method (100) of any of claims 1 to 10, wherein determining that the transmitter is transmitting the first signal on the first channel in unlicensed spectrum comprises determining that the first channel is occupied.

12. The method (100) of claim 11, wherein determining that the first channel is occupied comprises performing a first Listen Before Talk, LBT, procedure on the first channel.

13. The method (100) of claim 12, wherein transmitting the data on the first channel in unlicensed spectrum comprises transmitting the data when the first LBT procedure indicates that the first channel is unoccupied, or wherein transmitting the data on the first channel in unlicensed spectrum comprises transmitting the data when a second LBT procedure indicates that the first channel is unoccupied.

14. The method (100) of any of claims 1 to 13, wherein the first channel is associated with a plurality of data channels including the first channel, and the first signal causes operations on one or more of the data channels including the first channel to stop.

15. A computer program product comprising non transitory computer readable media having stored thereon a computer program comprising instructions which, when executed on at least one processor, cause the at least one processor to carry out a method (100) according to any of the preceding claims.

16. Apparatus (500) in a wireless device for transmitting data on a first channel in unlicensed spectrum, the apparatus (500) comprising a processor (502) and a memory (504), the memory (504) containing instructions executable by the processor (502) such that the apparatus (500) is operable to:
determine that a transmitter is transmitting a first signal on the first channel in unlicensed spectrum;
transmit a second signal to cause the transmitter to cease transmitting the first signal, wherein the second signal is a signal for use to abort on ongoing transmission; and
transmit the data on the first channel in unlicensed spectrum.

17. The apparatus (500) of claim 16, wherein the memory (504) contains instructions executable by the processor (502) such that the apparatus (500) is operable to perform the method (100) of any of claims 2 to 14.

## Patentansprüche

1. Verfahren (100) in einer drahtlosen Vorrichtung zum Senden von Daten auf einem ersten Kanal in einem unlizenzierten Spektrum, wobei das Verfahren (100) Folgendes umfasst:
Bestimmen (102), dass ein Sender ein erstes Signal auf dem ersten Kanal im unlizenzierten Spektrum sendet;
Senden (104) eines zweiten Signals, um den Sender zu veranlassen, das Senden des ersten Signals zu unterlassen, wobei das zweite Signal ein Signal zur Verwendung zum Abbrechen einer laufenden Übertragung ist; und
Senden (106) der Daten auf dem ersten Kanal im unlizenzierten Spektrum.

2. Verfahren (100) nach Anspruch 1, wobei das zweite Signal auf einem zweiten Kanal im unlizenzierten Spektrum gesendet wird.

3. Verfahren (100) nach Anspruch 2, wobei das zweite Signal ungeachtet dessen gesendet wird, ob der zweite Kanal belegt ist.

4. Verfahren (100) nach Anspruch 2 oder 3, wobei das zweite Signal ohne Bestimmen dessen gesendet wird, ob der zweite Kanal belegt ist.

5. Verfahren (100) nach einem der Ansprüche 2 bis 4, wobei das zweite Signal ohne Durchführen einer Listen-Before-Talk-Prozedur, LBT-Prozedur, gesendet wird.

6. Verfahren (100) nach einem der Ansprüche 2 bis 5, wobei das zweite Signal mit einer hinlänglich niedrigen Leistung gesendet wird, so dass es nicht erforderlich ist, vor dem Senden des zweiten Signals zu bestimmen, ob der zweiten Kanal belegt ist.

7. Verfahren (100) nach einem der Ansprüche 2 bis 6, wobei das zweite Signal bei einer hinlänglich geringen Kanalbelegung gesendet wird, so dass es nicht erforderlich ist, vor dem Senden des zweiten Signals zu bestimmen, ob der zweiten Kanal belegt ist.

8. Verfahren (100) nach einem der Ansprüche 2 bis 7, wobei sich der zweite Kanal vom ersten Kanal unterscheidet und einen Kanal umfasst, der zum Senden des zweiten Signals reserviert ist, oder wobei der zweite Kanal derselbe wie der erste Kanal ist.

9. Verfahren (100) nach Anspruch 8, wobei das zweite Signal zumindest teilweise in einem Schutzband des ersten Kanals gesendet wird.

10. Verfahren (100) nach Anspruch 8 oder 9, wobei sich das zweite Signal zumindest teilweise mit dem ersten Signal überlappt.

11. Verfahren (100) nach einem der Ansprüche 1 bis 10, wobei das Bestimmen, dass der Sender das erste Signal auf dem ersten Kanal im unlizenzierten Spektrum sendet, Bestimmen umfasst, dass der erste Kanal belegt ist.

12. Verfahren (100) nach Anspruch 11, wobei das Bestimmen, dass der erste Kanal belegt ist, Durchführen einer ersten Listen-Before-Talk-Prozedur, LBT-Prozedur, auf dem ersten Kanal umfasst.

13. Verfahren (100) nach Anspruch 12, wobei das Senden der Daten auf dem ersten Kanal im unlizenzierten Spektrum Senden der Daten umfasst, wenn die erste LBT-Prozedur anzeigt, dass der erste Kanal unbelegt ist, oder wobei das Senden der Daten auf dem ersten Kanal im unlizenzierten Spektrum Senden der Daten umfasst, wenn eine zweite LBT-Prozedur anzeigt, dass der erste Kanal unbelegt ist.

14. Verfahren (100) nach einem der Ansprüche 1 bis 13, wobei der erste Kanal mit einer Mehrzahl von Datenkanälen assoziiert ist, die den ersten Kanal umfasst, und das erste Signal bewirkt, dass Operationen auf einem oder mehreren der Datenkanäle, die den ersten Kanal umfassen, gestoppt werden.

15. Computerprogrammprodukt, umfassend ein nichttransitorisches computerlesbares Medium, das ein Computerprogramm darauf gespeichert aufweist, das Anweisungen umfasst, die bei Ausführung auf mindestens einem Prozessor den mindestens einen Prozessor zum Durchführen eines Verfahrens (100) nach einem der vorhergehenden Ansprüche veranlassen.

16. Einrichtung (500) in einer drahtlosen Vorrichtung zum Senden von Daten auf einem ersten Kanal in einem unlizenzierten Spektrum, wobei die Einrichtung (500) einen Prozessor (502) und einen Speicher (504) umfasst, wobei der Speicher (504) Anweisungen enthält, die vom Prozessor (502) ausgeführt werden können, so dass die Einrichtung (500) ausgelegt ist zum:
Bestimmen, dass ein Sender ein erstes Signal auf dem ersten Kanal im unlizenzierten Spektrum sendet;
Senden eines zweiten Signals, um den Sender zu veranlassen, das Senden des ersten Signals zu unterlassen, wobei das zweite Signal ein Signal zur Verwendung zum Abbrechen einer laufenden Übertragung ist; und
Senden der Daten auf dem ersten Kanal im unlizenzierten Spektrum.

17. Einrichtung (500) nach Anspruch 16, wobei der Speicher (504) Anweisungen enthält, die vom Prozessor (502) ausgeführt werden können, so dass die Einrichtung (500) zum Durchführen des Verfahrens (100) nach einem der Ansprüche 2 bis 14 ausgelegt ist.

## Revendications

1. Procédé (100) dans un dispositif sans fil pour l'émission de données sur un premier canal dans un spectre sans licence, le procédé (100) comprenant :
la détermination (102) qu'un émetteur est en train d'émettre un premier signal sur le premier canal dans un spectre sans licence ;
l'émission (104) d'un deuxième signal pour amener l'émetteur à cesser d'émettre le premier signal, dans lequel le deuxième signal est un signal servant à abandonner une émission en cours ; et
l'émission (106) des données sur le premier canal dans un spectre sans licence.

2. Procédé (100) selon la revendication 1, dans lequel le deuxième signal est émis sur un deuxième canal dans un spectre sans licence.

3. Procédé (100) selon la revendication 2, dans lequel le deuxième signal est émis que le deuxième canal soit occupé ou non.

4. Procédé (100) selon la revendication 2 ou 3, dans lequel le deuxième signal est émis sans déterminer si le deuxième canal est occupé ou non.

5. Procédé (100) selon l'une quelconque des revendications 2 à 4, dans lequel le deuxième signal est émis sans réaliser une procédure Listen Before Talk, LBT.

6. Procédé (100) selon l'une quelconque des revendications 2 à 5, dans lequel le deuxième signal est émis à une puissance suffisamment basse pour qu'il ne soit pas nécessaire de déterminer si le deuxième canal est occupé ou non avant l'émission du deuxième signal.

7. Procédé (100) selon l'une quelconque des revendications 2 à 6, dans lequel le deuxième signal est émis à une occupation de canal suffisamment basse pour qu'il ne soit pas nécessaire de déterminer si le deuxième canal est occupé ou non avant l'émission du deuxième signal.

8. Procédé (100) selon l'une quelconque des revendications 2 à 7, dans lequel le deuxième canal est différent du premier canal et comprend un canal qui est réservé pour l'émission du deuxième signal, ou dans lequel le deuxième canal est le même que le premier canal.

9. Procédé (100) selon la revendication 8, dans lequel le deuxième signal est émis au moins partiellement dans une bande de garde du premier canal.

10. Procédé (100) selon la revendication 8 ou 9, dans lequel le deuxième signal chevauche au moins partiellement le premier signal.

11. Procédé (100) selon l'une quelconque des revendications 1 à 10, dans lequel la détermination que l'émetteur est en train d'émettre le premier signal sur le premier canal dans un spectre sans licence comprend la détermination que le premier canal est occupé.

12. Procédé (100) selon la revendication 11, dans lequel la détermination que le premier canal est occupé comprend la réalisation d'une première procédure Listen Before Talk, LBT, sur le premier canal.

13. Procédé (100) selon la revendication 12, dans lequel l'émission des données sur le premier canal dans un spectre sans licence comprend l'émission des données lorsque la première procédure LBT indique que le premier canal n'est pas occupé, ou dans lequel l'émission des données sur le premier canal dans un spectre sans licence comprend l'émission des données lorsqu'une deuxième procédure LBT indique que le premier canal n'est pas occupé.

14. Procédé (100) selon l'une quelconque des revendications 1 à 13, dans lequel le premier canal est associé à une pluralité de canaux de données comprenant le premier canal, et le premier signal provoque des opérations sur un ou plusieurs des canaux de données, y compris l'arrêt du premier canal.

15. Produit programme informatique comprenant des supports non transitoires lisibles par ordinateur sur lesquels est stocké un programme informatique comprenant des instructions qui, lorsqu'elles sont exécutées sur au moins un processeur, amènent l'au moins un processeur à réaliser un procédé (100) selon l'une quelconque des revendications précédentes.

16. Appareil (500) dans un dispositif sans fil pour l'émission de données sur un premier canal dans un spectre sans licence, l'appareil (500) comprenant un processeur (502) et une mémoire (504), la mémoire (504) contenant des instructions exécutables par le processeur (502) de sorte que l'appareil (500) soit fonctionnel pour :
déterminer qu'un émetteur est en train d'émettre un premier signal sur le premier canal dans un spectre sans licence ;
émettre un deuxième signal pour amener l'émetteur à cesser d'émettre le premier signal, dans lequel le deuxième signal est un signal servant à abandonner une émission en cours ; et
émettre les données sur le premier canal dans un spectre sans licence.

17. Appareil (500) selon la revendication 16, dans lequel la mémoire (504) contient des instructions exécutables par le processeur (502) de sorte que l'appareil (500) soit fonctionnel pour réaliser le procédé (100) selon l'une quelconque des revendications 2 à 14.
